(19) **Europäisches Patentamt**
**European Patent Office**
**Office européen des brevets**

(11) **EP 4 742 667 A1**

(12) **EUROPEAN PATENT APPLICATION**

(43) Date of publication:
**13.05.2026 Bulletin 2026/20**

(21) Application number: **24306880.6**

(22) Date of filing: **08.11.2024**

(51) International Patent Classification (IPC):
*H04N 19/124* (2014.01)   *H04N 19/136* (2014.01)
*H04N 19/157* (2014.01)   *H04N 19/176* (2014.01)
*H04N 19/18* (2014.01)   *H04N 19/61* (2014.01)
*H04N 19/82* (2014.01)

(52) Cooperative Patent Classification (CPC):
H04N 19/124; H04N 19/136; H04N 19/157;
H04N 19/176; H04N 19/18; H04N 19/61;
H04N 19/82

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **LE PENDU, Mikael**
**35700 RENNES (FR)**
• **BORDES, Philippe**
**35890 LAILLE (FR)**
• **NASER, Karam**
**35250 MOUAZE (FR)**

(74) Representative: **Interdigital**
**Immeuble ZEN 2**
**845 A, avenue des Champs Blancs**
**35510 Cesson-Sévigné (FR)**

(54) **INTERACTION OF QUANTIZATION CONSTRAINED CORRECTION WITH ZEROING-OUT OF COEFFICIENTS**

(57)    Method and apparatus are described wherein a filtered reconstructed image block from a prediction block and a reconstructed prediction residual is obtained and a Quantization Constrained correction is applied to the filtered reconstructed image block, wherein the Quantization Constrained correction applied depends on whether at least one part of transformed coefficients decoded for the image block have been zeroed out during encoding of the image block. In some embodiments, QC correction is skipped for these transformed coefficients. In some variants, scanning of the transformed coefficients is adapted for the image block.

FIG. 23

**Description**

**BACKGROUND**

The present application is related to video compression. The present embodiments relate to a method and an apparatus for encoding or decoding an image or a video. More particularly, the present embodiments relate to in-loop or out-of-loop filters and quantization.

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. In inter prediction, motion vectors used in motion compensation are often predicted from motion vector predictor. To reconstruct the video, the compressed data are decoded by inverse processes corresponding to the entropy coding, quantization, transform, and prediction.

**BRIEF SUMMARY**

Briefly stated, in one embodiment, a method for image block encoding or decoding is provided; The method comprises obtaining a filtered reconstructed image block from a prediction block and a reconstructed prediction residual and applying a Quantization Constrained correction to the filtered reconstructed image block, wherein the Quantization Constrained correction applied depends on whether at least one part of transformed coefficients decoded for the image block have been zeroed out during encoding of the image block.

In another embodiment, an apparatus for image block encoding or decoding is provided wherein the apparatus comprises one or more processors configured to obtain a filtered reconstructed image block from a prediction block and a reconstructed prediction residual and apply a Quantization Constrained correction to the filtered reconstructed image block, wherein the Quantization Constrained correction applied depends on whether at least one part of transformed coefficients decoded for the image block have been zeroed out during encoding of the image block.

In another aspect, a computer program product and a non-transitory computer readable medium storing executable program instructions to cause a computer executing the program instructions to perform the method mentioned above according to any one of the embodiments described herein is provided.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 illustrates an example of quantization and dequantization of a transform coefficient;
FIG. 5 illustrates an example of quantization bounds and reconstruction values;
FIG. 6 illustrates an example of reconstruction of a block with filtering;
FIG. 7 illustrates an example of quantization-constrained correction;
FIG. 8 illustrates an example of a projection function onto the quantization constraint;
FIG. 9 illustrates an example of a smooth correction function;
FIG. 10 illustrates an example of differential QC correction from residual block;
FIG. 11 illustrates an example of Low-Frequency Non-Separable Transform (LFNST) process;
FIG. 12 illustrates an example of NSPT applied to small block, while LFNST is applied for the other block sizes;
FIG. 13 illustrates an example of SBT position, type and transform type;
FIG. 14 illustrates an example of partial transform for a 64x64 block;
FIG. 15 illustrates an example of a diagonal scan per groups of 4x4 coefficients;
FIG. 16 illustrates an example of partial LFNST transform;
FIG. 17 illustrates an example of partial inverse LFNST transform;

FIG. 18 illustrates a block diagram of a QC correction of transform coefficients with adapted scanning for cases of partial zero-out;

FIG. 19 illustrates an example of a raster scan (left) and diagonal scan (right) based on the full width W and height H of a large transform with zero-out of high frequency coefficients, according to an embodiment;

FIG. 20 illustrates an example of a raster scan (left) and diagonal scan (right) based on the width W_lf and height H_lf of the subblock of non-zeroed-out coefficients in a large transform block, according to an embodiment;

FIG. 21 illustrates an example of a full LFNST transform;

FIG. 22 illustrates an example of a full LFNST inverse transform;

FIG. 23 illustrates a block diagram of a method for QC correction according to an embodiment;

FIG. 24 shows two remote devices communicating over a communication network in accordance with an example of the present principles;

FIG. 25 shows the syntax of a signal in accordance with an example of the present principles.

## DETAILED DESCRIPTION

In-loop filters are used to enhance reconstructed images before storing them in the reference buffer. In-loop filters form a whole family. Among them, deblocking filters (DBF) aim at reducing blocking artifacts occurring along block boundaries. Deblocking filters are usually designed to improve subjective quality, that is, the noticeability by the human visual system of such coding errors. In usual video coding standards such as HEVC and VVC, deblocking filters are predetermined based on coding information (such as prediction modes, motion vectors, transform coefficients) and on local variations across block boundaries. On the other hand, adaptive loop filters (ALF) are learnt at encoder side in order to minimize the mean squared error with respect to source images, then the learned filter weights are written to the bitstream. Adaptive loop filters are applied at CTU-level, while deblocking filters are run along block borders.

A quantization-constrained (QC) correction filter can be applied to a reconstructed block. The quantization-constrained (QC) correction filter adds a complementary step to existing filters with the goal to prevent these filters from losing information carried by the quantized transform coefficients signaled in the bitstream, while still preserving the filtering effect.

In the present disclosure, embodiments are provided for adapting the QC correction for blocks encoded with tools that involve partial or full zeroing-out of the block's transform coefficients.

In describing the various embodiments of the present disclosure, certain terminology is used herein for convenience only and should not be considered as limiting such embodiments. In the drawings, the same reference numerals are employed for designating the same elements throughout the several figures and the present description.

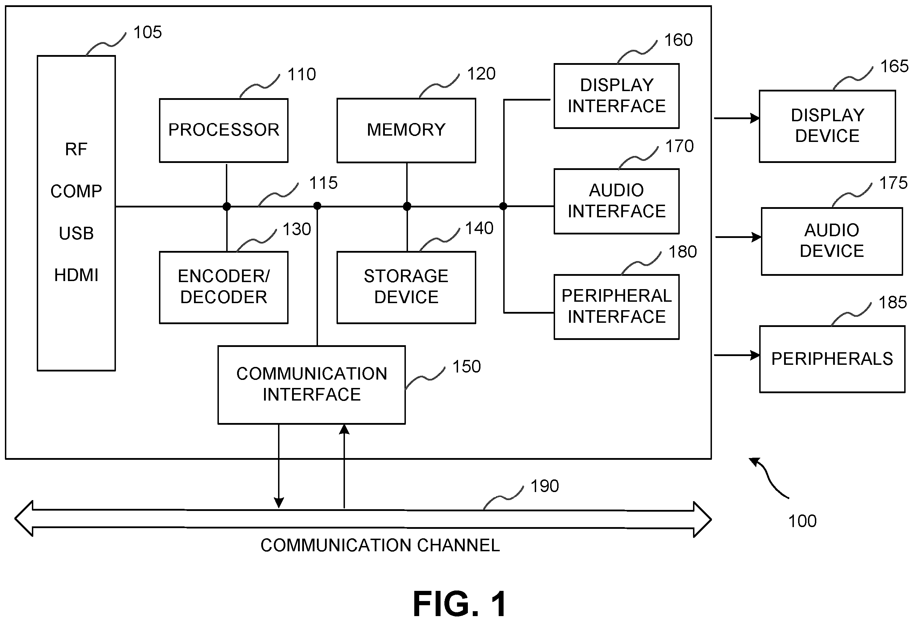

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

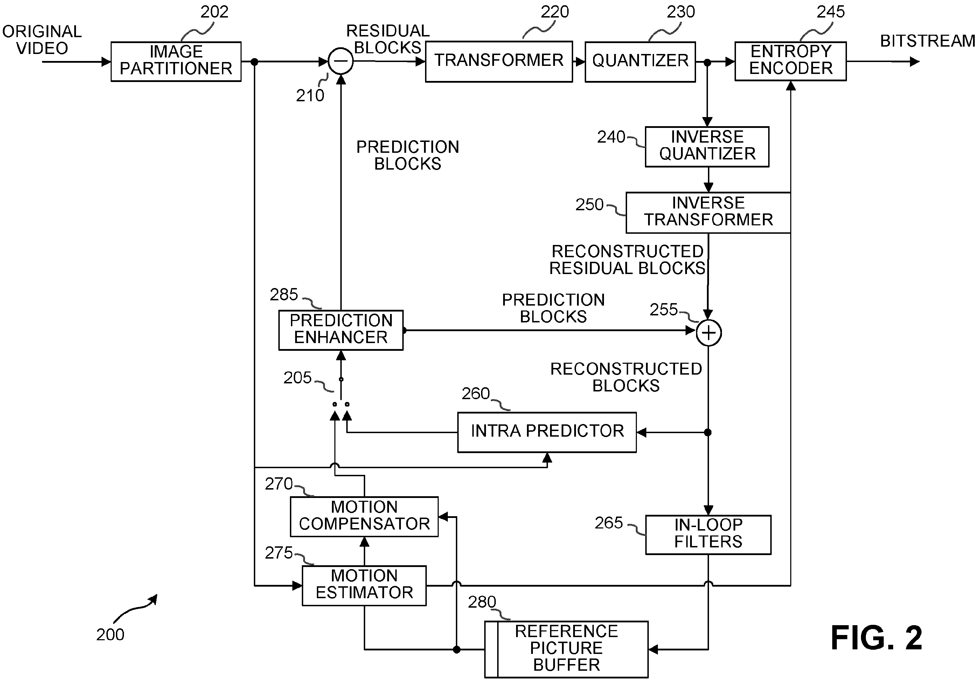

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

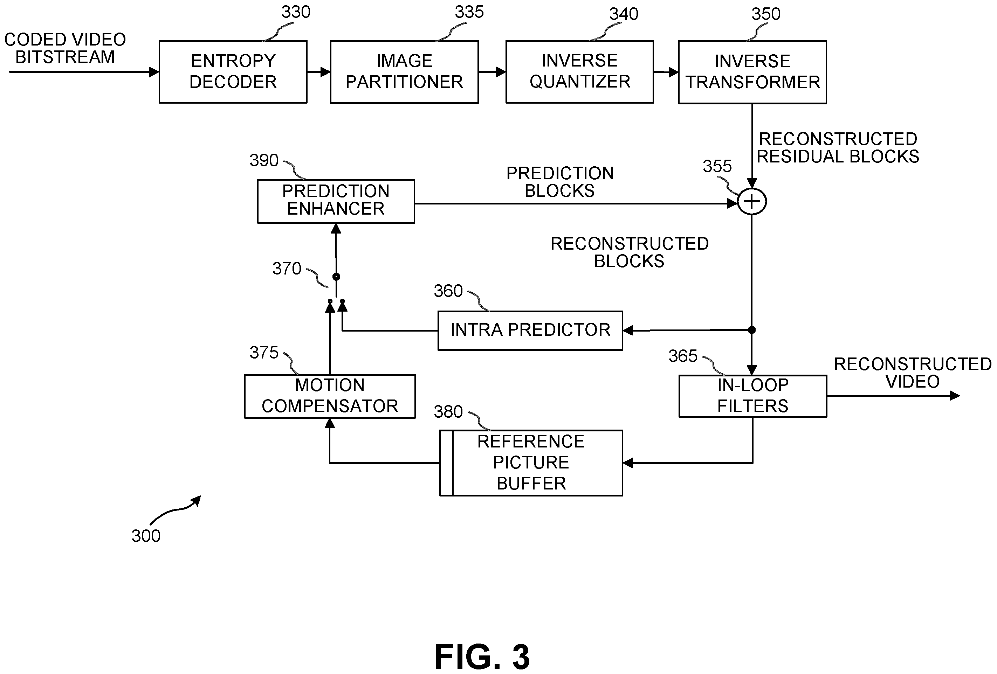

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, $U$ and $V$ (also denoted herein by C).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 are applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) are applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

HEVC and VVC standards specify conventional independent scalar quantization with Uniform Reconstruction Quantizers (URQs). The reconstructed transform coefficients $c_r$ of URQs are completely denoted by integer multiples of a quantization step size $\Delta$ (a.k.a. quantization step) which depends on a quantization parameter (QP). This integer specifies the associated transform coefficient level, which is transmitted in the bitstream as quantization levels $c_q$. On the decoder side, given a quantization level $c_q$ and a quantization step size $\Delta$, a reconstructed transform coefficient c, may be generated as follows :

$$c_r = Q^{-1}(c_q) = c_q \times \Delta \qquad (1)$$

On the encoder side, given a coefficient c (a.k.a a transform coefficient or more precisely a prediction residual transform coefficient) and a quantization step size $\Delta$, a quantization level $c_q$ may be generated as follows:

$$c_q = Q(c) = \lfloor abs(c)/\Delta + a \rfloor \times sgn(c), \qquad (2)$$

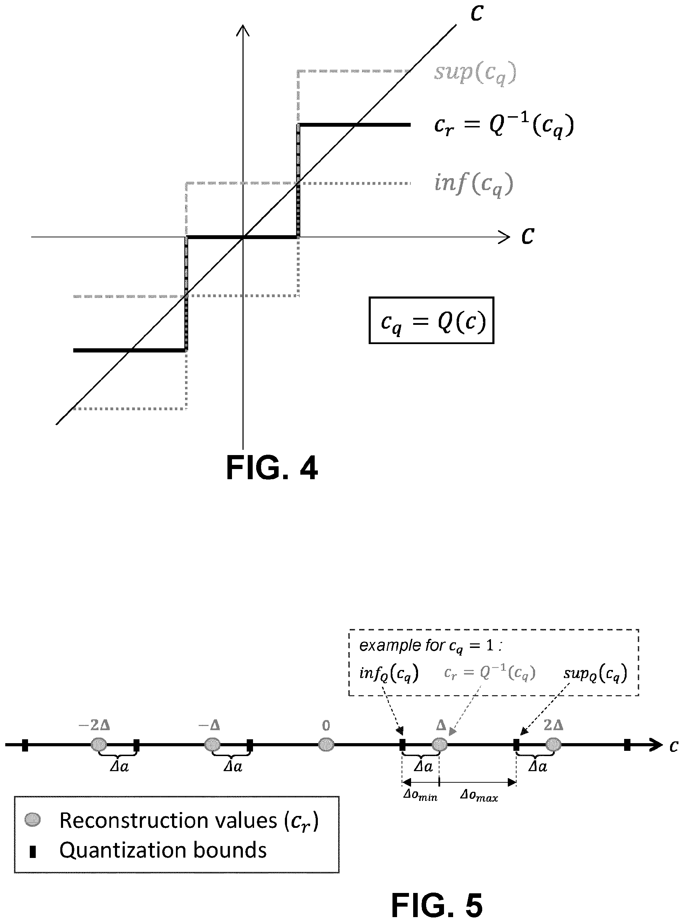

where $\lfloor \cdot \rfloor$ is the floor operation (i.e. rounding to the lower integer), *abs* is the absolute value, *sgn* is the sign function (i.e. returns 1 if c>0, -1 if c<0 and 0 if c=0), and *a* is a parameter such that 0<a<1. With this quantization method, every quantization level $c_q$ is associated to quantization bounds $inf_Q(c_q)$ and $sup_Q(c_q)$ such that an original coefficient *c* between $inf_Q(c_q)$ and $sup_Q(c_q)$ is quantized to $c_q$. Hence assuming this quantization method was used by the encoder, and given a quantization level $c_q$, the original coefficient *c* associated with $c_q$ is known to be between $inf_Q(c_q)$ and $sup_Q(c_q)$, as illustrated in FIG. 4. In the case of uniform quantization with quantization step size $\Delta$ and parameter *a*, the inferior and superior quantization bounds are defined as follows:

$$inf_Q(c_q) = \begin{cases} (c_q - o_{max}) \times \Delta & if\ c_q \leq 0 \\ (c_q + o_{min}) \times \Delta & if\ c_q > 0 \end{cases}, \qquad (3)$$

$$sup_Q(c_q) = \begin{cases} (c_q - o_{min}) \times \Delta & if\ c_q < 0 \\ (c_q + o_{max}) \times \Delta & if\ c_q \geq 0 \end{cases}, \qquad (4)$$

with bound offset $o_{min}$ and bound offset $o_{max}$ defined as $o_{min} = -a$ and $o_{max} = 1 - a$. This parameterization of the quantization bounds and reconstruction values is further illustrated in FIG. 5.

The encoder may use alternative strategies to select the quantization levels $c_q$. For example, rate distortion optimized quantization (RDOQ) optimizes the quantization levels accounting not only for the distortion (i.e., MSE), but also for the rate. In this case, it is no longer guaranteed that the original coefficients c are between the bounds $inf_Q(c_q)$ and $sup_Q(c_q)$.

In the quantization constrained correction, c is assumed to be bounded by $inf_Q(c_q)$ and $sup_Q(c_q)$, where $inf_Q(c_q)$ and $sup_Q(c_q)$ can be determined on the decoder side knowing the quantization level $c_q$, the scalar quantizer Q (a.k.a. scalar quantization operation) and its quantization parameter (QP). If the encoder uses quantization strategies that may break this assumption, such as RDOQ, the method remains applicable.

Quantization constrained correction filter

In the quantization-constrained correction filter, a quantization constraint is defined as the following equation:

$$Q(c_x) = c_q, \qquad (5)$$

where Q is a scalar quantization operation (a.k.a. scalar quantizer), $c_q$ is the quantization level of a prediction residual transform coefficient c, and $c_x$ is a reconstructed value of the corresponding transform coefficient c. When no in-loop or out-of-loop filter is applied to a reconstructed picture, each coefficient $c_x$ is obtained as $c_x = c_r$. Since $c_r = Q^{-1}(c_q)$, its value is between the quantization bounds $inf(c_q)$ and $sup(c_q)$ (see FIG. 4). Therefore, in this case, the quantization constraint $Q(c_r) = c_q$ is satisfied. Assuming that each quantization level was determined by the encoder as $c_q = Q(c)$, where c is the original (unquantized) coefficient, then $Q(c_r) = Q(c)$, which is a necessary condition to reconstruct the original coefficient c without error. More generally, the absolute error $|c_r - c|$ between a reconstructed coefficient and the corresponding original coefficient is such that $0 \leq |c_r - c| < sup_Q(c_q) - inf_Q(c_q)$.

However, in the case of filtering the reconstructed picture (e.g., with DBF, SAO, ALF, etc.), each coefficient $c_x$ is defined as $c_x = c_f$ where $c_f$ is the corresponding prediction residual transform coefficient of said reconstructed and filtered picture ($c_f$ may not be computed explicitly in video coding). In this case, $c_x$ might not satisfy the above quantization constraint anymore, resulting in a loss of information. For example, the DBF filter improves the subj ective quality by removing block discontinuities, but it may also remove some details in the filtered area at the borders of the blocks. As a result, for some coefficients, we may have $c_f > sup_Q(c_q)$ or $c_f < inf_Q(c_q)$, and thus $Q(c_f) \neq c_q$. Said otherwise, the quantization constraint is not necessarily satisfied. This results in a sub-optimal MSE of the filtered picture since the corresponding original coefficient c is expected to be in the range $[sup_Q(c_q), inf_Q(c_q)]$. Thus, $c_f$ is necessarily different from the original coefficient $c$ (i.e. $|c_f - c| > 0$), and the error $|c_f - c|$ is not bounded by $sup_Q(c_q) - inf_Q(c_q)$. Although the ALF filter is designed to reduce the MSE between the original and the reconstructed and filtered picture, it does not guarantee that the quantization constraint $Q(c_f) = c_q$ is satisfied for every coefficient $c_f$, hence potentially leading to sub-optimal MSE given that the quantization levels $c_q$ are known to both the encoder and the decoder.

The QC correction filter solves this problem by enforcing the quantization constraint on the prediction residual transform coefficients of the filtered picture.

Computation of the correction

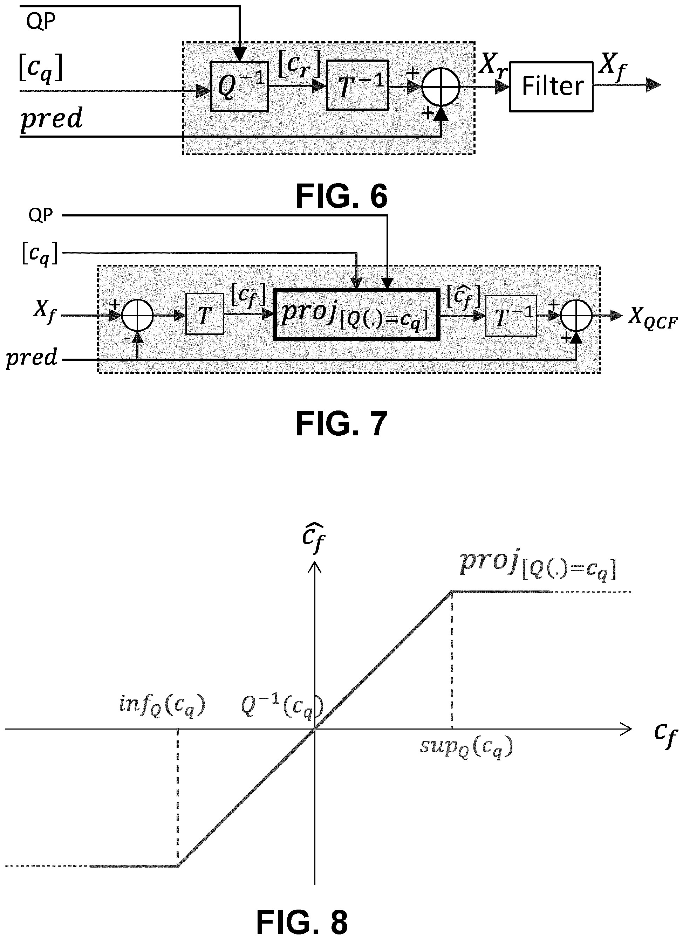

The QC correction is applied to an image block $X_f$ obtained by filtering a block $X_r$ previously obtained using conventional reconstruction steps in video coding, as shown in FIG. 6. These steps include:

- Scalar dequantization of quantization levels $c_q$ to produce reconstructed coefficients $c_r = Q^{-1}(c_q)$, where the dequantization function $Q^{-1}$ is parameterized by a quantization parameter QP and where each quantization level $c_q$ is assigned to a position within the block.
- Inverse transform $T^{-1}$ applied to the coefficients $c_r$, in order to obtain a prediction residual block.
- Reconstruction of the block $X_r$ as the sum between the prediction residual block and a prediction block *pred.*

After filtering $X_r$ to produce $X_f$, the QC correction described in FIG. 7 first converts $X_f$ back to prediction residuals and compute its transform coefficients $c_f$ in order to correct the values of these coefficients using a correction step that ensures that the quantization constraint $Q(\widehat{c_f}) = c_q$ is satisfied for the corrected transform coefficient $\widehat{c_f}$. The corrected transform coefficients are then converted back to obtain the corrected image block $X_{QCF}$ using the inverse transform $T^{-1}$ and the summation with the prediction *pred.* The steps of the QC correction are further detailed hereafter:

Prediction subtraction:

$X_f$ is converted back to prediction residuals. To this aim, the prediction block *pred* is subtracted from the filtered image block $X_f$ in order to obtain a filtered prediction residual block. The prediction *pred* is equal to the prediction used in the reconstruction stage. Therefore, the prediction block *pred* does not have to be computed again using the codec's prediction mechanisms. Instead, the prediction block may be stored in a buffer during the reconstruction and reused for the QC correction.

Forward Transform:

The filtered prediction residual block is then converted back to the transform domain using the forward transform $T$. In the case where several types of transforms or inverse transforms may be applied (e.g., DCT-II, DST-7, DCT-8), the QC correction uses the forward transform $T$ of the same type as the inverse transform $T^{-1}$ used during the reconstruction stage. For example, if a block X is reconstructed using the inverse of the DCT-II at S802, its corresponding block (i.e. the block of coefficients $c_f$ obtained from X) in the QC correction is transformed with forward DCT-II. The forward transform thus produces a new block of prediction residual transform coefficients $c_f$, named more simply transform coefficients $c_f$, each located at a given position within the block. Each transform coefficient $c_f$ can thus be associated with the quantization level $c_q$ used during the reconstruction stage, and which is located at the same position within the block.

Projection to the quantization constraint:

Each transform coefficient $c_f$ of the block of prediction residual transform coefficients is corrected to obtain a block of corrected prediction residual transform coefficients $\widehat{c_f}$, named more simply corrected transform coefficient $\widehat{c_f}$. The corrected version is computed as $\widehat{c_f} = proj_{[Q(.)=c_q]}(c_f)$, where $proj_{[Q(.)=c_q]}$ is a correction function (also called projection function onto the quantization constraint). This correction function ensures that the constraint $Q(\widehat{c_f}) = c_q$ is satisfied, where $c_q$ is the quantization level associated with $c_f$, and where $Q$ is the scalar quantizer associated to the scalar dequantizer $Q^{-1}$ used in the reconstruction stage. The correction function can be defined as follows:

$$proj_{[Q(.)=c_q]}(c_f) = \min(\max(c_f, inf_Q(c_q)), sup_Q(c_q)) \qquad (6)$$

It is illustrated in FIG. 8. With this definition, each corrected transform coefficient $\widehat{c_f}$ is always between the quantization bounds $inf_Q(c_q)$ and $sup_Q(c_q)$ of the quantization level $c_q$ for the quantizer $Q$. Hence $\widehat{c_f}$ satisfies $Q(\widehat{c_f}) = c_q$. However, if $c_f$ is already within the quantization bounds, no correction is applied (i.e. $\widehat{c_f} = c_f$), which preserves the filtering effect. The correction function in Equation 6 is defined to enforce the quantization constraint while also minimizing the squared error $(\widehat{c_f} - c_f)^2$ between the corrected and the uncorrected transform coefficient. However, other functions may be used. For example, a more general clipping function can be defined as $\widehat{c_f} = \min(\max(c_f, b_{inf}) b_{sup})$ where the correction bounds $b_{int}$, $b_{sup}$ may be computed similarly to $inf_Q(c_q)$ and $sup_Q(c_q)$ using Equations 3 and 4 respectively, but where the values of the parameters $o_{min}$ and $o_{max}$ are set independently of the parameter $a$. For example, $o_{min}$ and $o_{max}$ may be pre-determined parameters known to both the encoder and decoder. Note that using $o_{min}$ and $o_{max}$ such that $-a \leq o_{min} < o_{max} \leq 1 - a$ ensures that $inf_Q(c_q) \leq b_{inf} < b_{sup} \leq sup_Q(c_q)$. Hence, assuming that $c_q$ was computed with the quantization function in Equation 2 by the encoder, using such values of $o_{min}$ and $o_{max}$ still ensures that the quantization constraint $Q(\widehat{c_f}) = c_q$ is satisfied (since $inf_Q(c_q) < b_{inf} \leq \widehat{c_f} \leq b_{sup} < sup_Q(c_q)$). However, if other quantization methods are used by the encoder (e.g., RDOQ), the original coefficient may not be between the bounds $inf_Q(c_q)$ and $sup_Q(c_q)$ defined in Equations 3 and 4. Hence, in such cases, it may be advantageous to compute the correction bounds $b_{inf}$ and $b_{sup}$ using other values of $o_{min}$ and $o_{max}$ that do not necessarily satisfy the constraint $-a \leq o_{min} < o_{max} \leq 1 - a$.

In another example, a smooth version of the correction function $proj_{[Q(.)=c_q]}$ may be used such as:

$$\widehat{c_f} = s \cdot \tanh\left(\frac{c_f - o}{s}\right) + o, \qquad (7)$$

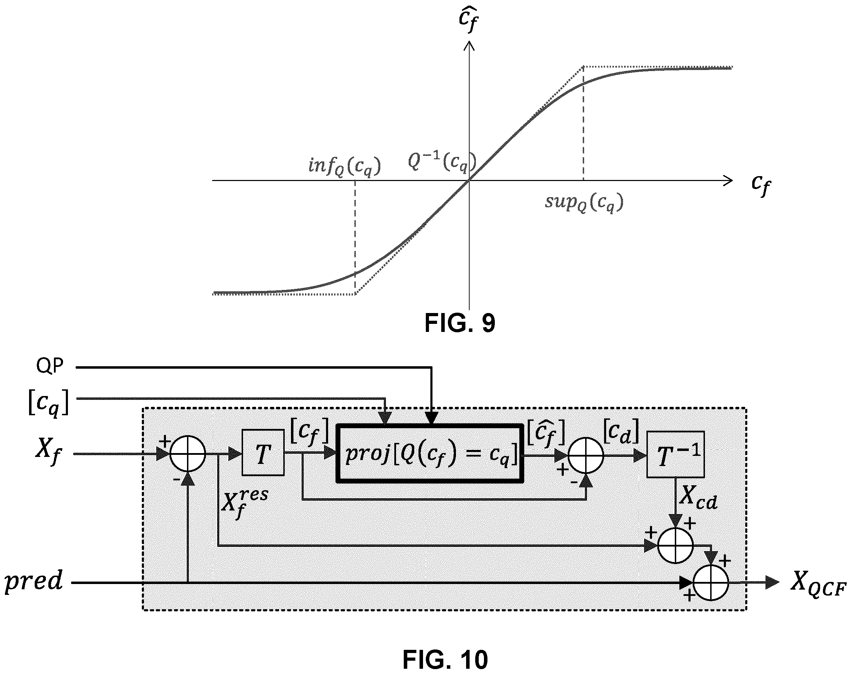

with a scale $s = \frac{sup_Q(c_q) - inf_Q(c_q)}{2}$ and an offset $o = \frac{sup_Q(c_q) + inf_Q(c_q)}{2}$. This smooth function is illustrated by FIG. 9. Similarly to the previous example, the correction bounds $b_{inf}$ and $b_{sup}$ may be used instead of the inferior and superior bounds $inf_Q(c_q)$ and $sup_Q(c_q)$ respectively for the computation of the scale and offset parameters s and o.

Inverse Transform and addition with prediction:

After enforcing the quantization-constraint in the residual transform domain, the corrected transform coefficients $\widehat{c_f}$ are converted back to the image domain to obtain a final corrected image block $X_{QCF}$. This is performed by first applying the inverse transform again to obtain a block of corrected prediction residuals. The same inverse transform $T^{-1}$ is used as in the reconstruction stage. Finally, the prediction block *pred* is added back to the block of corrected prediction residuals to obtain a corrected image block $X_{QCF}$ which satisfies the quantization constraint.

Differential computation of the QC correction

In a variant, the QC correction may also be performed with a differential computation as depicted in FIG. 10, where the inverse transform is applied to the difference between the corrected transform coefficients $\widehat{c}_f$ and uncorrected transform coefficients $c_f$. Similarly to the QC correction, the filtered residual block $X_f^{res}$ is first computed as the difference between the filtered block $X_f$ and the prediction block *pred,* then the transform and the projection function are applied to $X_f^{res}$ to obtain the corrected transform coefficients $\widehat{c}_f$. For each corrected transform coefficient $\widehat{c}_f$ and its uncorrected version $c_f$, the differential QC correction additionally computes a correction difference transform coefficient $c_d$ as:

$$c_d = \widehat{c}_f - c_f \qquad\qquad (8)$$

Inverse transform is then applied to the correction difference transform coefficients $c_d$ to obtain a correction difference block $X_{cd}$.

The QC corrected block $X_{QCF}$ is finally computed as the sum of the filtered residual block $X_f^{res}$, the prediction block *pred,* and the correction difference block $X_{cd}$. Alternatively, the final QC corrected block $X_{QCF}$ may also be computed as the sum of the filtered image block before correction $X_f$ and the correction difference block $X_{cd}$.

Tools with coefficients zero-out are described below.

Low frequency non-separable transform (LFNST)

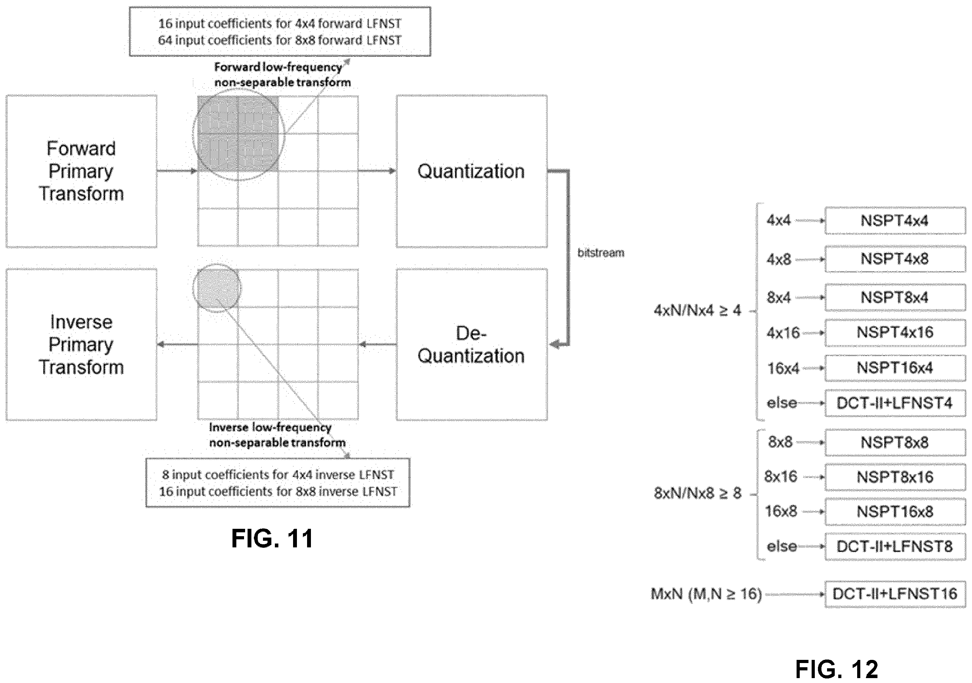

In VVC *("*Algorithm description for Versatile Video Coding and Test Model 11 (VTM 11) ", Jianle Chen, Yan Ye, Seung Hwan Kim, JVET-T2002, 20th JVET Meeting, teleconference, Oct. 2020), LFNST is applied between forward primary transform and quantization (at encoder) and between de-quantization and inverse primary transform (at decoder side) as shown in FIG. 11. In LFNST, 4x4 non-separable transform or 8x8 non-separable transform is applied according to block size. For example, 4x4 LFNST is applied for small blocks (i.e., min (width, height) < 8) and 8x8 LFNST is applied for larger blocks (i.e., min (width, height) > 4).

Application of a non-separable transform, which is being used in LFNST, is described as follows using input as an example. To apply 4x4 LFNST, the 4x4 input block X

$$X = \begin{bmatrix} X_{00} & X_{01} & X_{02} & X_{03} \\ X_{10} & X_{11} & X_{12} & X_{13} \\ X_{20} & X_{21} & X_{22} & X_{23} \\ X_{30} & X_{31} & X_{32} & X_{33} \end{bmatrix}$$

is first represented as a vector $\vec{X}$ :

$$\vec{X}$$
$$= [X_{00} \quad X_{01} \quad X_{02} \quad X_{03} \quad X_{10} \quad X_{11} \quad X_{12} \quad X_{13} \quad X_{20} \quad X_{21} \quad X_{22} \quad X_{23} \quad X_{30} \quad X_{31} \quad X_{32} \quad X_{33}]^T$$

The non-separable transform is calculated as $\vec{F} = T \cdot \vec{X}$, where $\vec{F}$ indicates the transform coefficient vector, and T is a 16x16 transform matrix. The 16x1 coefficient vector $\vec{F}$ is subsequently re-organized as 4x4 block using the scanning order for that block (horizontal, vertical or diagonal). The coefficients with smaller index will be placed with the smaller scanning index in the 4x4 coefficient block.

Reduced Non-separable transform

LFNST (low-frequency non-separable transform) is based on direct matrix multiplication approach to apply non-separable transform so that it is implemented in a single pass without multiple iterations. However, the non-separable transform matrix dimension needs to be reduced to minimize computational complexity and memory space to store the transform coefficients. Hence, reduced non-separable transform (or RST) method is used in LFNST. The main idea of the reduced non-separable transform is to map an **N** (N is commonly equal to 64 for 8x8 NSST) dimensional vector to an **R** dimensional vector in a different space, where **N/R (R < N)** is the reduction factor. Hence, instead of N×N matrix, RST matrix becomes an **R×N** matrix as follows:

$$T_{RxN} = \begin{bmatrix} t_{11} & t_{12} & t_{13} & \dots & t_{1N} \\ t_{21} & t_{22} & t_{23} & \ddots & t_{2N} \\ \vdots & & & \ddots & \vdots \\ t_{R1} & t_{R2} & t_{R3} & \cdots & t_{RN} \end{bmatrix}$$

where the **R** rows of the transform are **R** bases of the **N** dimensional space. The inverse transform matrix for RT is the transpose of its forward transform. For 8x8 LFNST, a reduction factor of 4 is applied, and 64x64 direct matrix, which is conventional 8x8 non-separable transform matrix size, is reduced to 16x48 direct matrix. Hence, the $48 \times 16$ inverse RST matrix is used at the decoder side to generate core (primary) transform coefficients in $8 \times 8$ top-left regions. When16x48 matrices are applied instead of 16x64 with the same transform set configuration, each of which takes 48 input data from three 4x4 blocks in a top-left 8x8 block excluding right-bottom 4x4 block. With the help of the reduced dimension, memory usage for storing all LFNST matrices is reduced from 10KB to 8KB with reasonable performance drop. In order to reduce complexity LFNST is restricted to be applicable only if all coefficients outside the first coefficient sub-group are non-significant. Hence, all primary-only transform coefficients have to be zero when LFNST is applied. This allows a conditioning of the LFNST index signalling on the last-significant position, and hence avoids the extra coefficient scanning in the current LFNST design, which is needed for checking for significant coefficients at specific positions only. The worst-case handling of LFNST (in terms of multiplications per pixel) restricts the non-separable transforms for 4x4 and 8x8 blocks to 8x16 and 8x48 transforms, respectively. In those cases, the last-significant scan position has to be less than 8 when LFNST is applied, for other sizes less than 16. For blocks with a shape of $4 \times N$ and Nx4 and N > 8, the proposed restriction implies that the LFNST is now applied only once, and that to the top-left 4x4 region only. As all primary-only coefficients are zero when LFNST is applied, the number of operations needed for the primary transforms is reduced in such cases. From encoder perspective, the quantization of coefficients is remarkably simplified when LFNST transforms are tested. A rate-distortion optimized quantization has to be done at maximum for the first 16 coefficients (in scan order), the remaining coefficients are enforced to be zero.

Non-separable primary transform (NSPT) in ECM ("Algorithm description of Enhanced Compression Model 11 (ECM 11) ", Muhammed Coban, Ru-Ling Liao, Karam Naser, Jacob Ström, Li Zhang, JVET-AF2025, 32nd JVET Meeting, Hannover, DE, Oct. 2023*)*
NSPT replaces the 2 stages of transform (DCT2-LFNST) by a single non-separable transform.

This is only allowed for small blocks as indicated in FIG. 12. All NSPTs consist of 35 sets and 3 candidates (similar to the current LFNST). The kernels of NSPT have the following shapes:

- NSPT4$\times$4: 16$\times$16

- NSPT4x8/NSPT8x4: 32x20

- NSPT8$\times$8: 64$\times$32

- NSPT4$\times$16/NSPT16$\times$4: 64x24

- NSPT8$\times$16/NSPT16$\times$8: 128x40

Therefore, 12, 32, 40 and 88 coefficients are zeroed out using NSPT4x8/NSPT8x4, NSPT8x8, NSPT4$\times$16/NSPT16$\times$4 and NSPT8$\times$16/NSPT16$\times$8 respectively. High Frequency coefficients zero-out in large transform blocks

Large block-size transforms with high-frequency zeroing

In VVC, large block-size transforms, up to 64$\times$64 in size, are enabled, which is primarily useful for higher resolution video, e.g., 1080p and 4K sequences. High frequency transform coefficients are zeroed out for the transform blocks with size (width or height, or both width and height) equal to 64, so that only the lower-frequency coefficients are retained. For example, for an M$\times$N transform block, with M as the block width and N as the block height, when M is equal to 64, only the left 32 columns of transform coefficients are kept. Similarly, when N is equal to 64, only the top 32 rows of transform coefficients are kept. When transform skip mode is used for a large block, the entire block is used without zeroing out any values. In addition, transform shift is removed in transform skip mode. The VTM also supports configurable max transform size in SPS, such that encoder has the flexibility to choose up to 32-length or 64-length transform size depending on the need of specific implementation.

Sub-block Transform (SBT)

In VTM, subblock transform is introduced for an inter-predicted CU. In this transform mode, only a sub-part of the residual block is coded for the CU. When inter-predicted CU with cu_cbf equal to 1, cu_sbt_flag may be signaled to indicate whether the whole residual block or a sub-part of the residual block is coded. In the former case, inter MTS information is further parsed to determine the transform type of the CU. In the latter case, a part of the residual block is coded with inferred adaptive transform and the other part of the residual block is zeroed out.

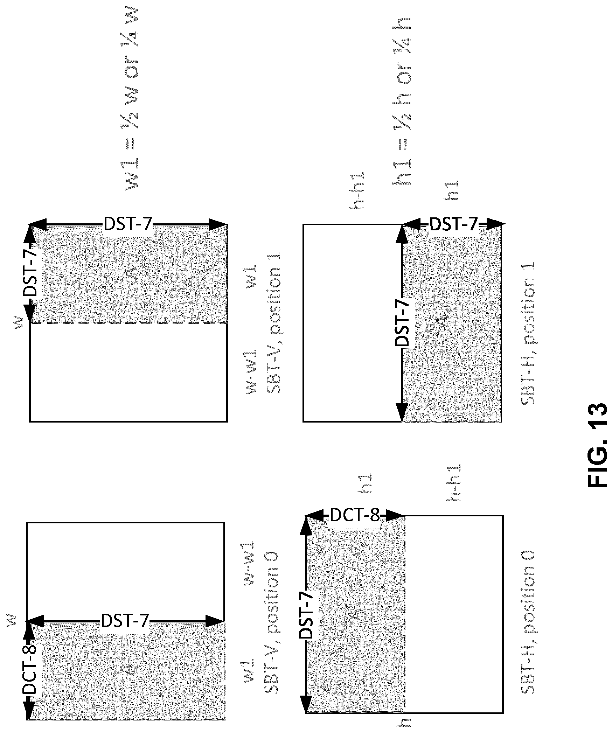

When SBT is used for an inter-coded CU, SBT type and SBT position information are signaled in the bitstream. There are two SBT types and two SBT positions, as indicated in FIG. 13. For SBT-V (or SBT-H), the TU width (or height) may equal to half of the CU width (or height) or 1/4 of the CU width (or height), resulting in 2:2 split or 1:3/3:1 split. The 2:2 split is like a binary tree (BT) split while the 1:3/3: 1 split is like an asymmetric binary tree (ABT) split. In ABT splitting, only the small region contains the non-zero residual. If one dimension of a CU is 8 in luma samples, the 1:3/3:1 split along that dimension is disallowed. There are at most 8 SBT modes for a CU.

Position-dependent transform core selection is applied on luma transform blocks in SBT-V and SBT-H (chroma TB always using DCT-2). The two positions of SBT-H and SBT-V are associated with different core transforms. More specifically, the horizontal and vertical transforms for each SBT position is specified in FIG. 13. For example, the horizontal and vertical transforms for SBT-V position 0 is DCT-8 and DST-7, respectively. When one side of the residual TU is greater than 32, the transform for both dimensions is set as DCT-2. Therefore, the subblock transform jointly specifies the TU tiling, cbf, and horizontal and vertical core transform type of a residual block.

The SBT is not applied to the CU coded with combined inter-intra mode.

Skip Mode

In HEVC and VVC, inter predicted CUs may be coded in skip mode. In this case the inter prediction is directly performed with a predicted motion vector, and no prediction residual is coded. Therefore, using the skip mode for a CU is equivalent to zeroing-out all the transform coefficients of the block.

Several video coding tools (LFNST, NSTP, zeroing of high frequencies in large blocks, SBT, skip mode, ...) may result in setting some of the transform coefficients (or all the coefficients) of a block to zero on the encoder side. For such coefficients, the quantization process is not performed, and the corresponding quantization levels are not signaled.

However, the QC correction is designed based on the assumption that the transform coefficients have been quantized. Embodiments described herein provides for adapting the QC correction blocks using these tools.

In addition, the signaling of quantization levels may also be skipped for a block by signaling instead a Coded Block Flag (CBF) equal to zero. In this case, the reconstructed block is equal to the prediction block. However, the decoder cannot infer whether the encoder's decision to skip the residual coding is the result of a transform and quantization process (with all the transform coefficients quantized to zero), or a zeroing-out operation. Furthermore, when the CBF is equal to zero, the syntax indicating which type of transform was used by the encoder (e.g., lfnst index indicating if LFNST is used) is not signaled since the reconstruction step does not need to apply the inverse transform in this case. Hence, both the quantization levels $c_q$ (all equal to zero) and the transform coefficients $c_f$ computed from the filtered block $X_f$ in the QC correction are unreliable.

The present disclosure describes adaptions of the QC correction when at least some transform coefficients of a block are set to zero by the encoder outside of the quantization process, or when the decoder cannot detect what encoder process has been used to skip the coding of the block's prediction residual, resulting in coefficients all equal to zero.

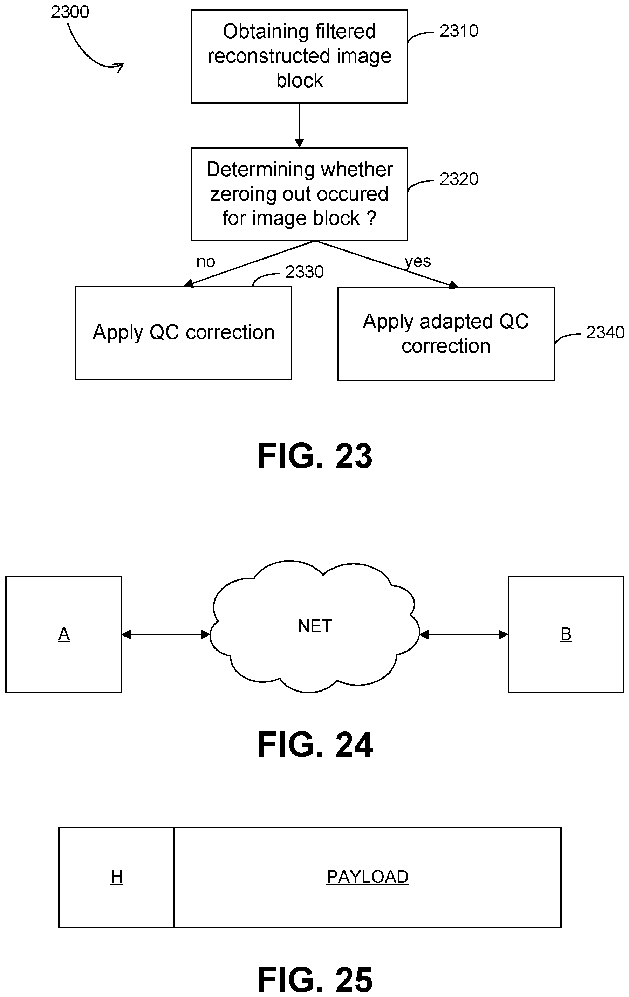

FIG. 23 illustrates a block diagram of a method 2300 for QC correction according to an embodiment. The method 2300 and embodiments described below can be implemented in a method for encoding or decoding a block of an image or a video.

At 2310, a filtered reconstructed image block (e.g. $X_f$ in FIG. 6) is obtained from a prediction block *(pred)* and a reconstructed prediction residual. The reconstructed prediction residual is obtained for example as in FIG. 6 from an inverse transform $T^{-1}$ applied to reconstructed coefficients $c_r$ dequantized from decoded quantization levels $c_q$. The filtered reconstructed image block $X_f$ is obtained by adding the reconstructed prediction residual to the prediction block *pred* to obtain the reconstructed image block $X_r$ and filtering the reconstructed image block $X_r$.

At 2320, it is determined whether at least one part of transformed coefficients decoded for the image block have been zeroed out during encoding of the image block. Variants for such determination are described further below. For example, determining that at least one part of transformed coefficients decoded for the image block have been zeroed out during encoding of the image block comprises at least one of: the image block is coded in a skip mode, a coded block flag is decoded for the image block with a zero value, the image block is coded using a non-separable transform LFNST or NSPT, the image block is coded using a subblock transform (SBT) mode, or the transform block is a large block having a width or a height higher than a given size.

If no zeroing-out has occurred for the block (no at 2320), then at 2330, QC correction is applied to the block for example as described with FIG. 7 or FIG. 10. Otherwise, (yes at 2320), at 2340, an adapted QC correction is applied to the block. Embodiments for applying an adapted QC correction to the block are described further below. In some embodiments, QC correction is skipped for the transformed coefficients that have been zeroed out. In some embodiments, scanning order of coefficients in a block for which zeroing out occurred is adapted.

At 2330 or 2340, when the QC correction is applied for a coefficient position in the block, a transform coefficient is obtained (as in FIG. 7 or FIG. 10) from a transformed prediction residual determined between the filtered reconstructed image block $X_f$ and the prediction block *pred.* When the obtained transform coefficient is not between an inferior quantization bound and a superior quantization bound associated to a quantization level decoded for the transform coefficient at the coefficient position, the obtained transform coefficient is corrected.

The zero-out operation can be interpreted as a limit case of quantization with infinite quantization step, and thus infinite quantization bounds. In the QC correction, using infinite correction bounds is equivalent to skipping the correction of the coefficient. Some embodiments for applying an adapted QC correction imply skipping of the QC correction for zeroed-out coefficients. Skipping of the QC correction for zeroed-out coefficients can be implemented in variants as follows:

- Fully skipping QC correction of a block for blocks coded with full zero-out (e.g., SBT, skip mode, CBF=0).
- Partially skipping QC correction only for zeroed-out coefficients (e.g., LFNST, NSPT, high frequency coefficients of large blocks)

  ○ An adaption of the scanning of coefficients is described for this case.
  ○ An adaptation is also described for using the full transform and inverse transform in the QC correction even if only a partial transform and inverse transform are used in the encoding of the block and in the reconstruction step.
  ○ Adaptations for the case of the differential QC correction are also described.

- Adaptations to apply QC correction in a block with a CBF equal to 0.

Fully zeroed-out blocks with mode decision (skip mode, SBT)

In an embodiment, when QC correction is applied to a region (e.g. slice, picture, CTU,), and when a block in the region is coded using a coding mode that skips the signaling of the prediction residual, then the QC correction of the block is also skipped.

For example, if a CU is coded in skip mode, the QC correction is not applied to the CU.

In another example, if a CU is coded with the SBT mode, the CU is further split into several TUs where the coding of the prediction residual is skipped for at least one TU. In this case, the TUs for which the coding of the prediction residual was skipped are detected based on the SBT mode, following the same process as in the reconstruction step (e.g., based on the horizontal mode SBT-H, or the vertical mode SBT-V, and on the position as indicated in FIG. 13). The QC correction is thus skipped for the detected TUs. In a variant, a flag indicating if a TU is coded without prediction residual is determined during the reconstruction step. The flag is then reused in the QC correction step to decide if the correction of the TU is skipped.

In a variant, the QC correction is skipped for a block if all the quantization levels $c_q$ of the block are equal to zero, or equivalently if the block has a CBF flag equal to zero.

Partial zero-out (high frequency of large blocks, LFNST, NSPT)

In another embodiment, when performing the QC correction of a block coded using a coding mode that applies partial zero-out of transform coefficients, the QC correction is skipped for the transform coefficients at zeroed-out positions in the block.

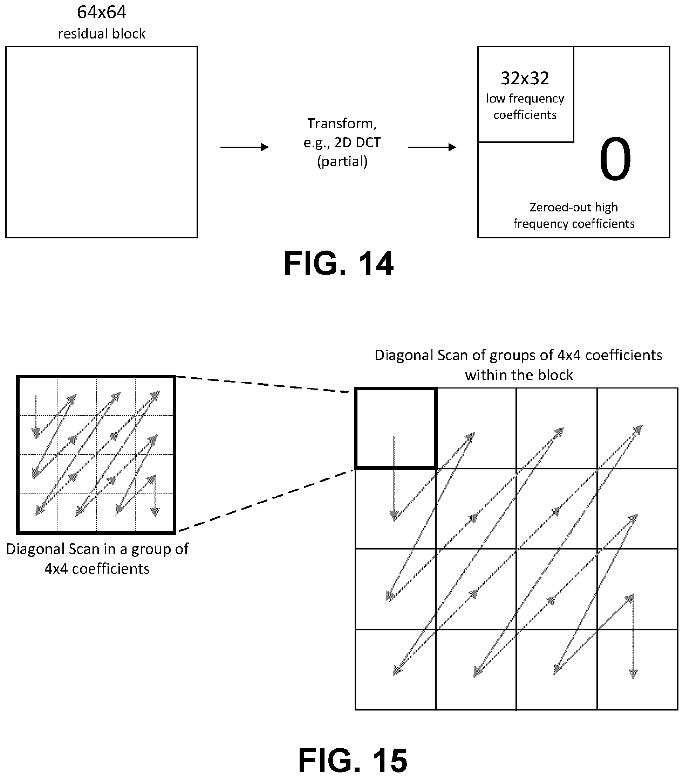

A variant of this embodiment relates to high frequency zeroing-out for large blocks. For example, in VTM, the high frequency coefficients are zeroed-out in large blocks. For example, if the block's width is 64, the right 32 columns of transform coefficients are zeroed-out, and if the block's height is 64, the bottom 32 rows of a transform coefficients are zeroed-out as illustrated in FIG. 14 for a 64x64 block. This makes it possible to use a faster partial transform that only computes the coefficients that are not zeroed-out. According to this embodiment, the QC correction is thus skipped for the high frequency coefficients at zeroed-out positions in large transform blocks with a width or height above a threshold (e.g., skip the right 32 columns for a block of width 64, or the bottom 32 rows for a block of height 64).

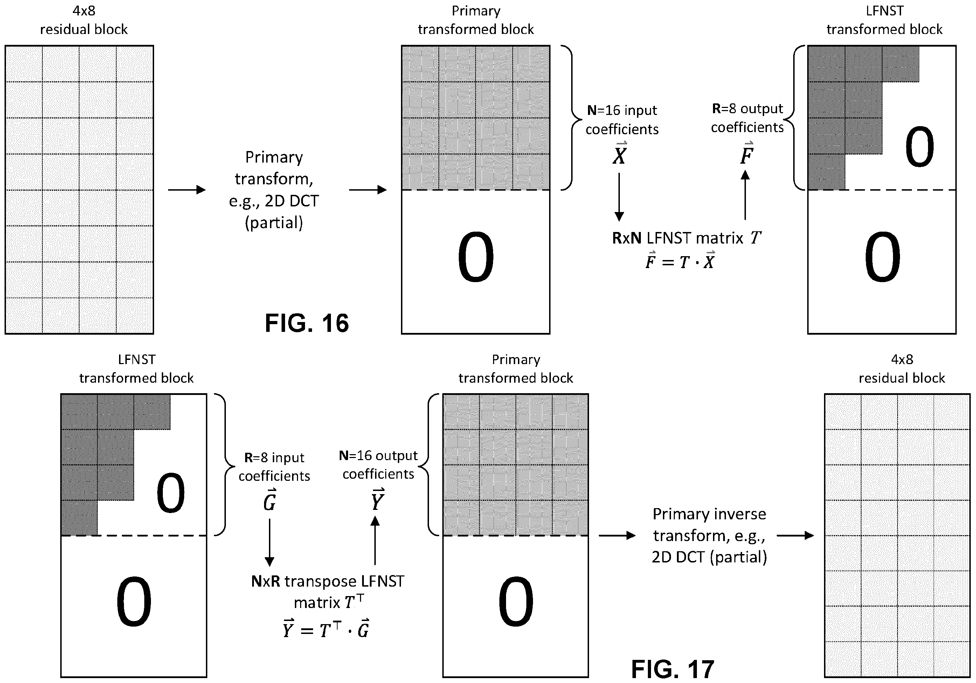

Another variant of this embodiment relates to LFNST/NSPT transform. In this example, when a block is coded with LFNST, a primary transform is first applied, and a secondary transform is applied to the primary transform coefficients in order to obtain the final transform coefficients. Depending on the block size, the primary transform, the secondary transform, or both may be computed partially with zeroing-out of some coefficients. In the example depicted in FIG. 16 for a 4x8 block, both the primary and the secondary transform perform partial zeroing-out. In this example, the bottom 4x4 block of transform coefficient is zeroed-out after the primary transform. Then, the secondary transform is applied to the 16 primary coefficients of the top 4x4 subblock, using a reduced $\mathbf{R} \times \mathbf{N}$ LFNST matrix T with N=16 input transform coefficients and R=8 output transform coefficients. The R output transform coefficients are arranged in the block at the $\mathbf{R}$ first positions according to a scanning order (e.g., diagonal scan per group of 4x4 coefficients illustrated in FIG. 15), and the remaining transform coefficients in the top 4x4 subblock are set to zero. The inverse transform depicted in FIG. 17 is performed using the $\mathbf{N} \times \mathbf{R}$ matrix $T^\mathrm{T}$(transpose of the matrix $T$) to reconstruct $\mathbf{N}$=16 intermediate coefficients (arranged in the top 4x4 subblock) from the $\mathbf{R}$=8 LFNST coefficients, and a partial inverse transform finally reconstruct the full 4x8 block from the top 4x4 subblock of intermediate coefficients.

Similarly, in NSPT, a matrix-based transform is performed where a reduced $\mathbf{R} \times \mathbf{N}$ NSPT matrix may be used (with $\mathbf{R} < \mathbf{N}$) instead of a full $\mathbf{N} \times \mathbf{N}$ matrix (but in NSPT, the matrix-based transform is directly applied to the block of prediction residuals). In this case, the $\mathbf{R}$ output coefficients are positioned in the block according to a scanning order, and the transform coefficients at the remaining positions are zeroed out.

According to this variant, the QC correction is thus skipped for the transform coefficients at zeroed-out position in the transform blocks coded using LFNST or NSPT modes.

Another variant relates to adapting the scanning of coefficients. Skipping the QC correction of a transform coefficient $c_f$ may be performed by explicitly setting a corresponding corrected transform coefficient $\widehat{c_f}$ equal to $c_f$. In this case, all the positions in the block should be scanned to obtain the corrected transform coefficient $\widehat{c_f}$ (either by applying a correction function to $c_f$ if the correction is not skipped or by setting $\widehat{c_f}$ equal to $c_f$ if the correction is skipped). However, in practice, the QC correction of a transform coefficient $c_f$ may be performed by overwriting its value with the value of the corrected transform coefficient $\widehat{c_f}$. In this case, the QC correction of transform coefficients at zeroed-out positions may be skipped simply by not scanning these positions during the QC correction of the block. Hence in this variant, only the transform coefficients at non-zeroed out positions in the block are scanned for processing the QC correction.

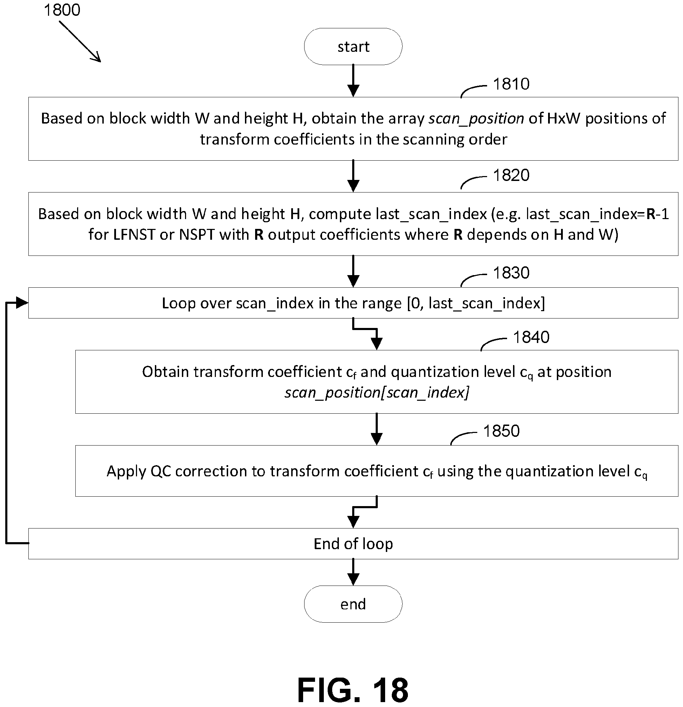

For example, FIG. 18 depicts a method 1800 for adapting scanning for cases of partial zero-out for QC correction of transform coefficients. As depicted in FIG. 18, at 1810, an array *scan_position* is first obtained based on the block's width W and height H, where the array *scan_position* contains the W*H successive positions of the transform coefficients in the block according to the scanning order. For example, a diagonal scan per groups of 4x4 coefficients as depicted in FIG. 15 may be used. At 1820, an index *last_scan_index* of the last position in the scanning order is then computed based on the block's width and height. For example, for a block coded with LFNST or NSPT the number $\mathbf{R}$ of output LFNST or NSPT transform coefficients is obtained based on the block's width W and height H as in the LFNST or NSPT transform process (e.g., $\mathbf{R}$ equal to the number of rows of the LFNST or NSPT transform matrix T), and *last_scan_index* is obtained as *last_scan_index* = $\mathbf{R}$ - 1.

Then at 1830, the QC correction is performed with a loop over an index *scan _index* between 0 and *last scan index*. For each value of *scan _index* in the loop, at 1840, the transform coefficient $c_f$ and the quantization level $c_q$ at the position *scan_position[scan_index]* are obtained, and at 1850, QC correction is applied to the transform coefficient $c_f$ using the quantization level $c_q$ (e.g., by applying the correction function in Equation 6). Note that the QC correction may be performed in the reverse scanning order by starting the loop with *scan index=last_scan_index,* and by decrementing the value of *scan index* at each step of the loop until *scan_index* is equal to 0.

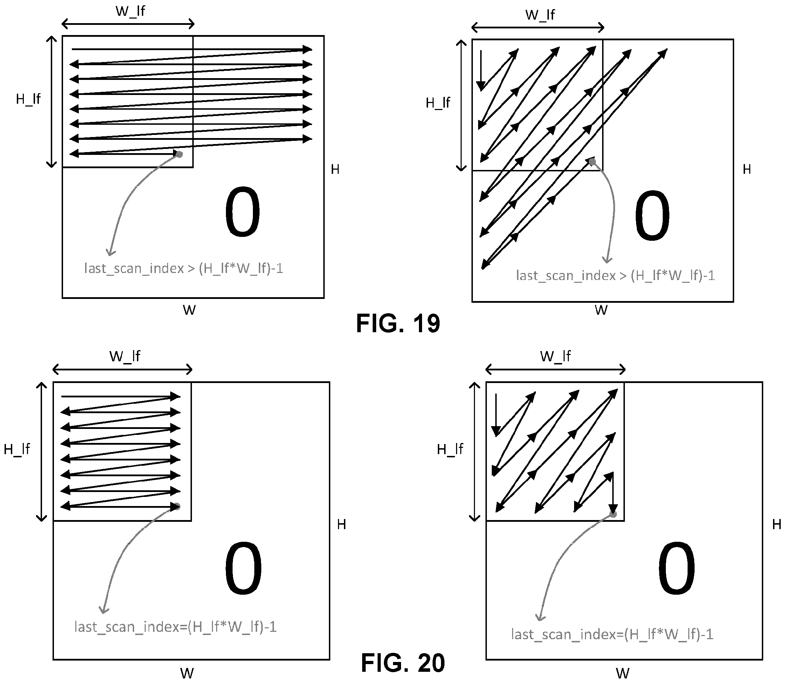

In the case of large blocks with zeroed-out high frequencies, obtaining the array *scan_position* based on the full width W and height H of the block results in scanning some positions with zero-out in addition to the positions without zero-out, as illustrated in FIG. 19 for the raster scan (from left to right, and from top to bottom) and the diagonal scan (or per group of 4x4 coefficients diagonal scan). As a result, the number of positions to be scanned is higher than the number of positions *W_lf* * *H_lf* without zero-out contained in the top left subblock of width *W_lf* and height *H_lf* (e.g., top left 32x32 subblock for a 64x64 block as shown in FIG. 14). Hence, the value of *last scan index* should be higher than (*W_lf* * *H_lf*) - 1. For example, in the case of the raster-scan, the *last scan _index* may be computed as *last_scan_index* = *W* * *(H_lf* - 1) + *W_lf* - 1. More generally, the value of *last scan _index* may be determined using a loop over the positions in *scan_position.* For example, *last_scan_index* is initialized as 0 (or as (*W_lf* * *H_lf*) - 1) and is incremented at each step of the loop until the position *scan_position[last_scan_index]* is equal to the position of the bottom right transform coefficient in the subblock of low frequencies (e.g., 2D position *(W_lf* - *1, H_lf* - 1), or 1D position in raster order *(W_lf* × *H_lf)* - 1).

In addition, the process 1800 in FIG. 18 may be modified by skipping the steps in the loop (i.e., obtaining the transform coefficient $c_f$ and quantization level $c_q$ and correcting the transform coefficient $c_f$) if the position *scan_position [scan_index]* is outside the top left *W_lf* × *H_lf* subblock of low frequencies.

In a variant for the case of large blocks with zeroed-out high frequencies, the array *scan_position* may be determined based on the width *W_lf* and height *H_lf* of the subblock of low frequencies that are not zeroed-out, instead of directly using the full width W and height H of the block. In this case, the *last scan index* is equal to the number transform coefficients in this subblock minus 1, i.e., *last_scan_index* = ($W_{lf}$ * $H\_lf$) - 1. For example, a raster scan or a diagonal scan (or per group of 4x4 coefficients diagonal scan) of the $W\_lf \times H\_lf$ subblock of low frequencies may be used as illustrated in FIG. 20.

Another variant relates to Full transform computation in QC correction. In the case where some coefficients are explicitly zeroed-out by the encoder, the reconstructed transform coefficients *c,* at zeroed-out position are always equal to zero in the reconstruction step in FIG. 6. Hence, in the reconstruction step, the inverse transform may be performed equivalently using the corresponding partial inverse transform which may be computed faster by ignoring the transform coefficients at zeroed-out positions.

However, in the QC correction depicted in FIG. 7, the correction is applied to a filtered block $X_f$ obtained by filtering the reconstructed block $X_r$. Due to these filtering operations, applying the full transform to the prediction residual block

$$X_f^{res} = X_f - pred$$ may result in non-zero transform coefficients $c_f$ even at zeroed-out positions. Hence, using the partial transform and partial inverse transform in the QC correction step may result in a loss of information by resetting these transform coefficients to zero.

As a result, in this variant, the full transform and the full inverse transform are applied in the QC correction, even if the reconstruction uses the corresponding partial inverse transform. For example, if a partial forward 2D DCT transform is used for encoding the block and the corresponding inverse 2D DCT transform is used in the reconstruction step (see FIG. 6), then in the QC correction in FIG. 7, the full forward 2D DCT and the full inverse 2D DCT are used.

Note however that in the case of LFNST or NSPT, the full transform may not be defined explicitly. For example, the LFNST or NSPT matrix T may be a reduced **R×N** matrix with **R<N** and with orthogonal rows (see FIG. 16). In this case, for the forward (partial) transform, only **R** output low frequency transform coefficients are computed as the matrix-vector

multiplication $\vec{F} = T \cdot \vec{X}$, where $\vec{X}$ is the vector of **N** input primary transform coefficients (or residuals in the case of NSPT), and the remaining **N-R** high frequency transform coefficients are set to zero. For the inverse (partial) transform depicted in FIG. 17, **N** output primary transform coefficients (or residuals in the case of NSPT) are computed as the matrix-

vector multiplication $\vec{Y} = T^\top \cdot \vec{G}$, where $T^\top$ is the transpose of the matrix $T$ and $\vec{G}$ is the vector of **R** input transform coefficients (and the remaining **N-R** coefficients are not used as input).

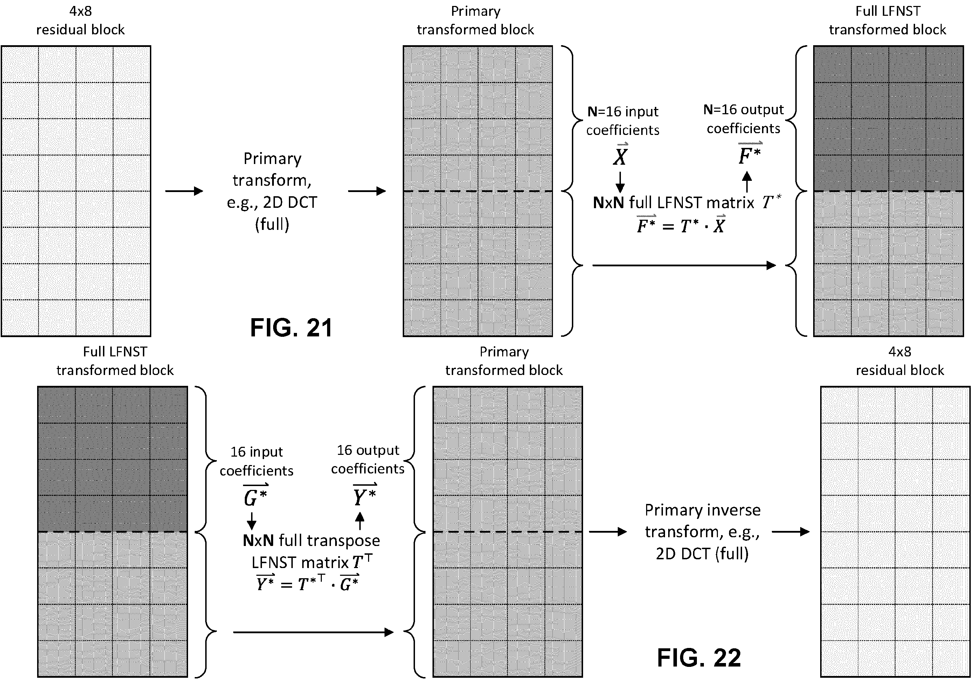

The corresponding full LFNST or NSPT transforms, and inverse transforms may be computed by replacing the **R×N** matrix *T* with a square **N×N** matrix *T\** associated to *T.* In this case, the forward transform depicted in FIG. 21

computes a vector $\overrightarrow{F^*} = T^* \cdot \vec{X}$ containing **N** output transform coefficients. The inverse transform is performed using the transpose of *T\** and a vector $\overrightarrow{G^*}$ of **N** input transform coefficients to compute the **N** output primary transform coefficients (or residuals in the case of NSPT) as $\overrightarrow{Y^*} = {T^*}^\top \cdot \vec{G}$.

In order to perform a full orthogonal transform corresponding to the partial LFNST or NSPT transform, the matrix *T\** should be an orthogonal matrix defined such that the first **R** rows of *T\** are equal to the **R** rows of the original matrix *T.* For example, *T\** may be constructed from *T* using an eigen vector decomposition of the matrix product $T^\top \cdot T$ between *T* and its transpose. The decomposition gives $T^\top \cdot T = Q \cdot \Lambda \cdot$ QT, where Q is an orthogonal matrix of **N** eigenvectors and Λ is a diagonal matrix containing the **N** corresponding eigenvalues in decreasing order in the diagonal. Using this decomposition, the last **N-R** eigenvectors (i.e., last **N-R** columns of *Q*, or last **N-R** rows or $Q^\top$) are orthogonal to the **R** rows of *T*. Since the **R** rows of *T* are also orthogonal to one another in the LMCS or NSPT transforms (up to rounding approximations), the matrix *T\** may be constructed by concatenating the **R** rows *of T* with the last **N-R** rows of $Q^\top$ (i.e., last **N-R** eigen vectors of $T^\top$ · *T* arranged as row vectors).

The computation of the square matrix *T\** from its corresponding matrix *T* may be performed offline for each LFNST and NSPT matrix so that *T\** is already known during the encoding or decoding process without requiring computations.

Note that in the case of LFNST, the full forward primary transform (e.g., full 2D DCT) should also be applied before applying the full forward LFNST secondary transform as depicted in FIG. 21. Similarly, the full inverse primary transform (e.g., full inverse 2D DCT) should also be applied after performing the full inverse LFNST secondary transform as depicted in FIG. 22.

Another variant relates to explicit zero-out of correction difference transform coefficients for differential QC correction. Note that in the variant of the QC correction with differential computation illustrated in FIG. 10, skipping the correction of a transform coefficient $c_f$ may be performed by explicitly setting the corresponding correction difference transform coefficient $c_d$ to the value zero (instead of applying a correction function to compute a corrected transform

coefficient $\widehat{c_f}$ and computing the difference $c_d = \widehat{c_f} - c_f$).

In addition, it may be noted that in the variant of FIG. 10, the inverse transform is applied to the correction difference transform coefficients $c_d$ (instead of the corrected transform coefficients $\widehat{c_f}$). Since the QC correction is skipped for the transform coefficients at zeroed-out positions in this embodiment, the corresponding correction difference transform coefficients $c_d$ are always equal to zero at these positions. As a result, the partial inverse transform may be applied in the differential QC correction (as in the reconstruction step) instead of the full inverse transform. Similarly, since the transform coefficients $c_f$ at zeroed-out positions are not needed to compute the corresponding correction difference transform coefficients $c_d$ (directly set to zero due to skipping), the partial forward transform may also be used in the differential QC correction instead of the full forward transform.

Another embodiment relates to applying an adapted QC correction in a block with CBF equal to zero. In the case where all the quantization levels $c_q$ of a block are equal to zero, the reconstruction step (see FIG. 6) does not need to apply the inverse transform since the reconstructed block $X_r$ is directly equal to the prediction block *pred.* Therefore, in this case, the information of the type of transform used by the encoder (and thus the corresponding type of inverse transform to be used by the decoder) is typically not signaled and is unknown to the decoder. For example, in VVC and ECM, an index *lfnst_idx* is used to determine the type of LFNST or NSPT transform used in a CU, where the value *lfnst_idx=0* indicates that LFNST and NSPT are not used. Similarly, in the Multiple Transform Selection (MTS) tool in VVC and ECM, a flag *mts_index* is used to determine the type of transform used in a CU among a predefined set of transform types (e.g., DCT-II, DCT-V, DCT-VIII, DST-IV, DST-VII...). The value *mts_index =0* indicates that MTS is not used (i.e., the default transform is used). If the CBF flag of the CU is equal to zero, the signaling of the *lfnst_idx* and *mts _index* in the bitstream is skipped.

Hence, in this embodiment, when all the quantization levels $c_q$ of a block are equal to zero (or equivalently when the CBF flag of a block is equal to zero), the QC correction of the block is applied using a default transform type and inverse transform type.

For example, the forward DCT-II and the inverse DCT-II are used respectively as the forward transform and inverse transform in the QC correction. In another example, the default transform type is defined implicitly by setting to default values all the information (e.g. flags, indexes) used to determine the transform type in the encoder and decoder. For example, if the CBF of a CU is equal to zero, the *lfnst_idx* and *mts_idx* of the CU are set to zero in order to determine the default transform type to be used in the QC correction of the CU.

In a variant, the syntax necessary to detect the type of transform (e.g., *lfnst_idx, mts_idx)* is signaled in the bitstream even in the case where all the quantization levels in the block are equal to zero (i.e. CBF flag equal to zero). The transform type used for the correction of the block is thus determined according to the signaled syntax.

In an embodiment, illustrated in FIG. 24, in a transmission context between two remote devices A and B over a communication network NET, the device A comprises a processor in relation with memory RAM and ROM which are configured to implement a method for encoding an image or a video according to any one of the embodiments described herein and the device B comprises a processor in relation with memory RAM and ROM which are configured to implement a method for decoding an image or a video according to any one of the embodiments described herein. In accordance with an example, the network is a broadcast network, adapted to broadcast/transmit a coded video from device A to decoding devices including the device B.

FIG. 25 shows an example of the syntax of a signal transmitted over a packet-based transmission protocol. Each transmitted packet P comprises a header H and a payload PAYLOAD. In some embodiments, the payload PAYLOAD may comprise data representative of at least one part of an image encoded according to any one of the embodiments described above. The payload can also comprise any signaling as described above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. A bitstream that includes one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:

   obtaining a filtered reconstructed image block from a prediction block and a reconstructed prediction residual;
   applying a Quantization Constrained correction to the filtered reconstructed image block,
   wherein the Quantization Constrained correction applied depends on whether at least one part of transformed coefficients decoded for the image block have been zeroed out during encoding of the image block.

2. The method of claim 1, wherein determining that at least one part of transformed coefficients decoded for the image block have been zeroed out during encoding of the image block comprises at least one of: the image block is coded in a skip mode, a coded block flag is decoded for the image block with a zero value, the image block is coded using a non-separable transform LFNST or NSPT, the image block is coded using a subblock transform (SBT) mode, or the transform block is a large block having a width or a height higher than a given size.

3. The method of claim 1 or 2, wherein applying the Quantization Constrained correction to the filtered reconstructed image block comprises:

   obtaining at least one transform coefficient from a prediction residual determined between the filtered reconstructed image block and the prediction block,
   correcting the at least one transform coefficient, when the at least one transform coefficient is not between an inferior quantization bound and a superior quantization bound, the inferior quantization bound, and the superior quantization bound being associated to a quantization level decoded for the at least one transform coefficient.

4. The method of claim 3, wherein in response to determining that at least one part of transformed coefficients decoded for the image block have been zeroed out during encoding of the image block, correcting the at least one transform coefficient is skipped for the at least one part of transformed coefficients decoded for the image block that have been zeroed out.

**5.** The method of claim 4, wherein skipping the correction is made by adapting a scanning order of the block.

**6.** The method of claim 5, wherein only non-zeroed-out transform coefficients are scanned and corrected.

**7.** The method of claim 3, wherein in response to determining that at least one part of transformed coefficients decoded for the image block have been zeroed out during encoding of the image block and that the filtered reconstructed image block has been obtained using a partial inverse transform, a full transform and a full inverse transform is used when applying the Quantization Constrained correction to the filtered reconstructed image block.

**8.** The method of any one of claims 3 or 5-6, wherein when the Quantization Constrained correction is applied using an inverse transform on a difference between the transform coefficient and the corrected transform coefficient, in response to determining that at least one part of transformed coefficients decoded for the image block have been zeroed out during encoding of the image block, correcting the at least one transform coefficient is performed by setting the difference to 0.

**9.** The method of claim 8, wherein partial forward and partial inverse transform is used for applying the Quantization Constrained correction.

**10.** The method of claim 1, wherein, for an image block for which all decoded quantization levels are 0, the Quantization Constrained correction is performed using a default transform and a corresponding inverse transform.

**11.** The method of any one of claims 1-10, comprising encoding the image block.

**12.** The method of any one of claims 1-10, comprising decoding the image block.

**13.** An apparatus comprising one or more processors configured to implement the method of any one of claims 1-12.

**14.** A computer program product including instructions for causing one or more processors to carry out the method of any of claims 1-12.

**15.** A non-transitory computer readable medium storing executable program instructions to cause a computer executing the instructions to perform a method according to any of claims 1-12.

**FIG. 1**

FIG. 2

**FIG. 3**

EP 4 742 667 A1

$$c_r = Q^{-1}(c_q)$$

$$sup(c_q)$$

$$inf(c_q)$$

$$\boxed{c_q = Q(c)}$$

## FIG. 4

example for $c_q = 1$ :

$inf_Q(c_q)$    $c_r = Q^{-1}(c_q)$    $sup_Q(c_q)$

$-2\Delta$    $-\Delta$    $0$    $\Delta$    $2\Delta$    $c$

$\Delta a$    $\Delta a$    $\Delta a$    $\Delta a$

$\Delta o_{min}$    $\Delta o_{max}$

⬤ Reconstruction values $(c_r)$

▮ Quantization bounds

## FIG. 5

EP 4 742 667 A1

**FIG. 6**

**FIG. 7**

**FIG. 8**

EP 4 742 667 A1

**FIG. 9**

**FIG. 10**

16 input coefficients for 4x4 forward LFNST
64 input coefficients for 8x8 forward LFNST

Forward low-frequency
non-separable transform

Forward
Primary
Transform

Quantization

bitstream

Inverse
Primary
Transform

De-
Quantization

Inverse low-frequency
non-separable transform

8 input coefficients for 4x4 inverse LFNST
16 input coefficients for 8x8 inverse LFNST

**FIG. 11**

4x4 → NSPT4x4

4x8 → NSPT4x8

8x4 → NSPT8x4

4xN/Nx4 ≥ 4

4x16 → NSPT4x16

16x4 → NSPT16x4

else → DCT-II+LFNST4

8x8 → NSPT8x8

8x16 → NSPT8x16

8xN/Nx8 ≥ 8

16x8 → NSPT16x8

else → DCT-II+LFNST8

MxN (M,N ≥ 16) → DCT-II+LFNST16

**FIG. 12**

FIG. 13

64x64
residual block

Transform,
e.g., 2D DCT
(partial)

32x32
low frequency
coefficients

0

Zeroed-out high
frequency coefficients

# FIG. 14

Diagonal Scan of groups of 4x4 coefficients
within the block

Diagonal Scan in a group of
4x4 coefficients

# FIG. 15

**4x8 residual block**

Primary transform, e.g., 2D DCT (partial)

**Primary transformed block**

**0**

N=16 input coefficients $\vec{X}$

RxN LFNST matrix $T$
$\vec{F} = T \cdot \vec{X}$

R=8 output coefficients $\vec{F}$

**LFNST transformed block**

**0**

**0**

**FIG. 16**

**LFNST transformed block**

**0**

**0**

R=8 input coefficients $\vec{G}$

NxR transpose LFNST matrix $T^{\top}$
$\vec{Y} = T^{\top} \cdot \vec{G}$

N=16 output coefficients $\vec{Y}$

**Primary transformed block**

**0**

Primary inverse transform, e.g., 2D DCT (partial)

**4x8 residual block**

**FIG. 17**

1800

start

1810

Based on block width W and height H, obtain the array *scan_position* of HxW positions of transform coefficients in the scanning order

1820

Based on block width W and height H, compute last_scan_index (e.g. last_scan_index=$R$-1 for LFNST or NSPT with $R$ output coefficients where $R$ depends on H and W)

1830

Loop over scan_index in the range [0, last_scan_index]

1840

Obtain transform coefficient $c_f$ and quantization level $c_q$ at position *scan_position[scan_index]*

1850

Apply QC correction to transform coefficient $c_f$ using the quantization level $c_q$

End of loop

end

# FIG. 18

last_scan_index > (H_lf*W_lf)-1

**FIG. 19**

last_scan_index=(H_lf*W_lf)-1

**FIG. 20**

**4x8
residual block**

**Primary
transformed block**

**Full LFNST
transformed block**

**Primary
transform,
e.g., 2D DCT
(full)**

**N=16 input
coefficients**
$\vec{X}$

**N=16 output
coefficients**
$\overrightarrow{F^*}$

**NxN** full LFNST matrix $T^*$
$$\overrightarrow{F^*} = T^* \cdot \vec{X}$$

**FIG. 21**

**Full LFNST
transformed block**

**Primary
transformed block**

**4x8
residual block**

**16 input
coefficients**
$\overrightarrow{G^*}$

**16 output
coefficients**
$\overrightarrow{Y^*}$

**NxN** full transpose
LFNST matrix $T^\top$
$$\overrightarrow{Y^*} = T^{*\top} \cdot \overrightarrow{G^*}$$

**Primary inverse
transform, e.g.,
2D DCT (full)**

**FIG. 22**

2300

Obtaining filtered
reconstructed image
block — 2310

Determining whether
zeroing out occured
for image block ? — 2320

no  — 2330          yes

Apply QC correction

Apply adapted QC
correction — 2340

# FIG. 23

A  ⟷  NET  ⟷  B

# FIG. 24

| H | PAYLOAD |
|---|---------|

# FIG. 25

Europäisches
Patentamt

European
Patent Office

Office européen
des brevets

# EUROPEAN SEARCH REPORT

**Application Number**

EP 24 30 6880

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2024/200011 A1 (INTERDIGITAL CE PATENT HOLDINGS SAS [FR]) 3 October 2024 (2024-10-03) | 1-3,8-15 | INV. H04N19/124 H04N19/136 |
| A | * figure 8 * <br> * page 1, line 11 - line 12 * <br> * page 13, line 15 - page 18, line 4 * <br> ----- | 4-7 | H04N19/157 H04N19/176 H04N19/18 H04N19/61 |
| Y | CN 102 148 989 B (UNIV XI AN JIAOTONG) 25 July 2012 (2012-07-25) | 1-3,8-15 | H04N19/82 |
| A | * paragraph [0035] * <br> ----- | 4-7 | |
| Y | C-W HSU (MEDIATEK) ET AL: "Description of SDR video coding technology proposal by MediaTek", 10. JVET MEETING; 20180410 - 20180420; SAN DIEGO; (THE JOINT VIDEO EXPLORATION TEAM OF ISO/IEC JTC1/SC29/WG11 AND ITU-T SG.16 ), , no. JVET-J0018 11 April 2018 (2018-04-11), XP030248125, Retrieved from the Internet: URL:http://phenix.int-evry.fr/jvet/doc_end _user/documents/10_San%20Diego/wg11/JVET-J 0018-v2.zip JVET-J0018.docx [retrieved on 2018-04-11] * section 2.1.3 * <br> ----- | 2 | |

-/--

**TECHNICAL FIELDS SEARCHED (IPC)**

H04N

The present search report has been drawn up for all claims

| Place of search | Date of completion of the search | Examiner |
|---|---|---|
| Munich | 31 March 2025 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................
& : member of the same patent family, corresponding document

EPO FORM 1503 03.82 (P04C01)

page 1 of 2

**EUROPEAN SEARCH REPORT**

Application Number

EP 24 30 6880

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | COBAN M ET AL: "Algorithm description of Enhanced Compression Model 11 (ECM 11)", 144. MPEG MEETING; 20231016 - 20231020; HANNOVER; (MOTION PICTURE EXPERT GROUP OR ISO/IEC JTC1/SC29/WG11), , no. m65800 ; JVET-AF2025 28 December 2023 (2023-12-28), XP030313758, Retrieved from the Internet: URL:https://dms.mpeg.expert/doc_end_user/documents/144_Hannover/wg11/m65800-JVET-AF2025-v1-JVET-AF2025.zip JVET-AF2025-v1.docx [retrieved on 2023-12-28] * sections 3.3.3 and 3.3.7 * | 2 | |
| | ----- | | |

TECHNICAL FIELDS SEARCHED (IPC)

The present search report has been drawn up for all claims

| Place of search | Date of completion of the search | Examiner |
|---|---|---|
| Munich | 31 March 2025 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6880

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2025

| Patent document cited in search report | Publication date | Patent family member(s) | Publication date |
|---|---|---|---|
| WO 2024200011 A1 | 03-10-2024 | NONE | |
| CN 102148989 B | 25-07-2012 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JIANLE CHEN** ; **YAN YE** ; **SEUNG HWAN KIM**. Algorithm description for Versatile Video Coding and Test Model 11 (VTM 11). *JVET-T2002, 20th JVET Meeting, teleconference*, October 2020

- **MUHAMMED COBAN** ; **RU-LING LIAO** ; **KARAM NASER** ; **JACOB STRÖM** ; **LI ZHANG**. Algorithm description of Enhanced Compression Model 11 (ECM 11). *JVET-AF2025, 32nd JVET Meeting, Hannover, DE*, October 2023